# EUROPÄISCHE PATENTANMELDUNG

(11) **EP 2 631 042 A2**
(43) Veröffentlichungstag der Anmeldung: **28.08.2013**
(21) Anmeldenummer: 13156290.2
(22) Anmeldetag: 22.02.2013
(51) Int. Cl.: B25J 9/08, B25J 18/04, B25J 19/02, B25J 5/02, B25J 9/02

(54) **Roboteranordnung und Betriebsverfahren**

(30) Priorität: 27.02.2012 DE 202012100646 U
(71) Anmelder: KUKA Systems GmbH, 86165 Augsburg (DE)
(72) Erfinder: Sturm, Thomas, 85259 Wiedenzhausen (DE)
(74) Vertreter: Ernicke, Klaus Stefan

(57) **Zusammenfassung**

Die Erfindung betrifft eine Roboteranordnung (1) und ein Betriebsverfahren. Die Roboteranordnung (1) weist einen programmierbaren Roboter (2) auf einem mehrachsig relativ zu einem Untergrund (14) beweglichen Tragmittel (15) auf, wobei der Roboter (2) mehrere Glieder (4,5,6,7) und Bewegungsachsen (I-VII) aufweist. Die Roboteranordnung (1) besitzt einen vom Roboter (2) betätigbaren Eigenantrieb (16) für das Tragmittel (15), welcher durch eine Verlagerungsbewegung eines Endglieds (4) des Roboters (2) betätigt wird.

## Beschreibung

Die Erfindung betrifft eine Roboteranordnung und ein Betriebsverfahren mit den Merkmalen im Oberbegriff des Verfahrens- und Vorrichtungshauptanspruchs.

Aus der Praxis ist eine Roboteranordnung bekannt, bei der ein ortsveränderlicher programmierbarer Roboter auf einer Zusatzachse angeordnet ist, die z.B. als Schwinge oder als lineare Fahrachse ausgebildet ist. Die Zusatzachse hat einen eigenen steuerbaren motorischen Antrieb und ist an eine Energieversorgung angeschlossen. Derartige Roboter sind als programmierbare Gelenkarmroboter mit mehreren positionsgesteuerten Bewegungsachsen ausgebildet.

Es ist Aufgabe der vorliegenden Erfindung, eine verbesserte Roboteranordnung und Betriebstechnik aufzuzeigen.

Die Erfindung löst diese Aufgabe mit den Merkmalen im Verfahrens- und Vorrichtungshauptanspruch. Die beanspruchte Roboteranordnung und das Betriebsverfahren haben den Vorteil, dass der Roboter durch den Eigenantrieb autark ist und sich aus eigener Kraft mit seinem Tragmittel bewegen kann. Ein eigener Fahr- oder Schwenkantrieb für das Tragmittel ist entbehrlich.

Die Verlagerungsbewegungen des Tragmittels können mehrachsig sein. Dies hat den Vorteil einer sehr großen und kaum eingeschränkten Beweglichkeit des Roboters mit seinem Tragmittel. Der Roboter kann ohne großen Aufwand bei seiner Verlagerungsbewegung auch Orte erreichen, die mit Fahr- oder Schwenkachsen nur schwer oder gar nicht zugänglich sind. Er kann mit dem Eigenantrieb das Tragmittel auch entlang beliebiger gerader oder gekrümmter Bewegungsbahnen lenken.

Der Roboter kann in unterschiedlicher Weise ausgebildet sein. Besondere Vorteile ergeben sich einerseits aus Gewichtsgründen für einen Leichtbauroboter, wobei das Gewicht und die Nutzlast der Roboteranordnung optimiert werden können. Insbesondere kann eine Versorgung mit Energie, Steuermitteln oder dergleichen on board sein.

Ferner ist es günstig, wenn der Roboter eine oder mehrere kraftgesteuerte oder kraftgeregelte eigene Bewegungsachsen aufweist, die mit einer entsprechenden Sensorik ausgestattet sind. Dies ist einerseits zum Teachen des Roboters und seiner Verlagerungsbewegungen mit dem Tragmittel günstig. Andererseits können mit dieser Sensitivität Hindernisse oder andere ungewöhnliche Betriebszustände erkannt und behoben bzw. umgangen werden. Dank der Sensitivität können auch der Eigenantrieb und die zugehörigen Roboterbewegungen optimiert werden. Ein solcher Roboter kann besonders genau positionieren. Außerdem kann ein sensitiver Roboter Suchfunktionen ausführen, um z.B. vorbereitete Gegenkraftabstützungen, z.B. Öffnungen zu finden. Auch zu Positionierzwecken ist die Sensitivität günstig.

Mit dem Eigenantrieb kann sich der Roboter grob und/oder fein positionieren. Eine Grobpositionierung ist z.B. auf dem Weg zum Zielort und in dessen Umgebung möglich. Eine Feinpositionierung ist auf dem Weg oder am Zielort über Referenzpunkte mit Werkstückbezug, z.B. an einer Schablone oder an einer Werkstückaufnahme, möglich. Ein sensitiver Roboter kann sich außerdem grob gegenüber einem Werkstück positionieren und aus dieser Position heraus das Werkstück oder einen Bezugspunkt am Werkstück suchen und nach dessen bekannter Position das in der Steuerung gespeicherte Bahnprogramm für die Durchführung des Prozesses korrigieren.

Ansonsten kann die Roboteranordnung auf anderen Wegen oder Strecken, z.B. auf einem Rückweg, auch anders, z.B. manuell oder mit einem ankuppelbaren Schleppantrieb bewegt werden.

Der Eigenantrieb kann ein vom Roboter betätigtes und am Tragmittel angeordnetes Antriebsmittel aufweisen. Hierfür gibt es verschiedene vorteilhafte Gestaltungsmöglichkeiten. Der Roboter kann sich selbst temporär an einer externen relativ ortsfesten, insbesondere stationären Gegenkraftabstützung festhalten und sich zu dieser hinziehen, von ihr wegschieben oder um diese drehen. Die Gegenkraftabstützung kann auf Reibung, Haften, Formschluss oder dgl. basieren. Alternativ kann der Roboter einen am Tragmittel angeordneten Kurbeltrieb oder dgl. betätigen. Über eine formschlüssige Gegenkraftabstützung kann eine genauere Positionsreferenz gebildet werden. Ansonsten kann die Roboteranordnung auch andere geeignete Positioniermittel für die Ortsveränderung des Roboters aufweisen.

Der Untergrund auf oder an dem sich der Roboter mit seinem Tragmittel bewegt, kann ein Boden, eine Wand oder ein anderes Strukturteil, z.B. auch ein Werkstück sein. Das Tragmittel kann mit seiner Kinematik und seiner Abstützung in unterschiedlicher Weise ausgebildet sein.

Die Einsatzgebiete der beanspruchten Roboteranordnung sind vielfältig. Die Roboteranordnung ist in der Lage, am Zielort unterschiedliche Aufgaben und Prozesse auszuführen. Diese können auch komplex sein, wobei mehrere unterschiedliche Werkzeuge zum Einsatz kommen und vom Roboter gegebenenfalls mit einer Wechselkupplung gehandhabt werden. Die Roboteranordnung kann außerdem Bauteile, Werkzeuge und sonstigen Bedarf zur Durchführung des Prozesses mitführen, ggf. mittels eines am Tragmittel angeschlossenen und wechselbaren Anhängers. Auf dem Tragmittel kann zudem eine Lageverstellung für den Roboter vorhanden sein, mit dem er zusätzliche Beweglichkeit erhält, um auch besondere oder schwierige Arbeitsstellen zu erreichen. Die Roboteranordnung kann ferner eine Hilfsvorrichtung aufweisen, die den Roboter bei der Prozessausführung unterstützt und z.B. ein vom Roboter vorher positioniertes Bauteil am Werkstück in Position hält, so dass Roboter anschließend einen Fügeprozess ausführen kann. Die von der Roboteranordnung ausführbaren Prozesse können mehrteilig und komplex sein, wobei der Roboter unterschiedlichste Jobs ausführen kann, z.B. Handhaben, Fügen oder Bearbeiten von Bauteilen oder Werkstücken.

In einer Ausgestaltung der Erfindung weist der Eigenantrieb eine externe und relativ ortsfeste, insbesondere stationäre Gegenkraftabstützung auf.

Eine Ausführung sieht vor, dass das Tragmittel eine Plattform aufweist, auf der zumindest ein Roboter angeordnet ist.

Bei einer Ausführungsform ist am Tragmittel eine Versorgung, insbesondere eine Energieversorgung und eine Steuerung, des Roboters angeordnet.

Vorteilhaft ist eine Ausbildung des Antriebsmittels als ein vom Roboter greifbares Abstützmittel, das der Roboter mit einer externen Gegenkraftabstützung, insbesondere an einem Untergrund oder Referenzort, in Eingriff bringt.

Eine günstige Ausführung sieht vor, dass das Tragmittel eine bewegliche Führung, insbesondere einen Ausleger, für das vom Roboter betätigte Abstützmittel aufweist.

Bei einer Ausgestaltung weist die Gegenkraftabstützung eine oder mehrere relativ ortsfeste, insbesondere stationäre Öffnungen, insbesondere einen Öffnungsraster, auf.

Eine Ausführungsform eines Treibantriebs besitzt ein bewegtes Treibelement, insbesondere ein Rad, Reibrad oder Ritzel, das mit dem Untergrund oder mit einem relativ ortsfesten Treibelement zusammenwirkt.

Ein als Kurbelantrieb ausgebildeter Treibantrieb kann vorteilhafterweise eine Sicherung haben.

Eine Ausgestaltung der Roboteranordnung zeichnet sich durch ein Positioniermittel aus, das als ein relativ ortsfester Referenzpunkt mit definierter Lage an einem Referenzort, insbesondere am Untergrund, an einem Werkstück oder an einer Arbeitsstelle, ausgebildet ist und das mit einem Abstützmittel zusammenwirkt.

In einer Ausführungsform ist ein Positioniermittel als Ausrichtmittel an einem Abstützmittel und/oder an einer externen Gegenkraftabstützung ausgebildet.

Ein Positioniermittel kann auch als Absteckung oder als relativ ortsfeste formschlüssige Aufnahme für das Tragmittel ausgebildet sein.

Für die Ausgestaltung des Roboters ist dessen Ausbildung als Gelenkarmroboter von Vorteil. Bevorzugt hat ein Roboter mehrere beweglich miteinander verbundene Glieder.

In einer alternativen Ausführungsform kann das Tragmittel eine externe, insbesondere stationäre Führung aufweisen. Es kann auch ggf. nur in einer Richtung oder Bewegungsachse beweglich und ggf. geführt sein.

In den Unteransprüchen sind verschiedene vorteilhafte Ausgestaltungen der Erfindung angegeben.

Die Erfindungen ist in den Zeichnungen beispielhaft und schematisch dargestellt. Im Einzelnen zeigen:
- Figur 1:: eine Roboteranordnung mit einem Roboter und einem Tragmittel sowie einem Eigenantrieb und einem Anhänger,
- Figur 2 bis 4:: verschiedene prinzipielle Varianten für die Ausbildung eines Tragmittels und eines Eigenantriebs,
- Figur 5 bis 8:: einen Bewegungsablauf einer Roboteranordnung gemäß Figur 1 zur Durchführung einer Verlagerungsbewegung mit Eigenantrieb,
- Figur 9 bis 13:: verschiedene Varianten zur Bildung einer Gegenkraftabstützung für ein vom Roboter geführtes und zu Antriebszwecken benutztes Antriebsmittel,
- Figur 14 und 15:: Varianten der Roboteranordnung und ihrer Bewegungsmöglichkeiten sowie der Gegenkraftabstützung,
- Figur 16 und 17:: eine Variante der Roboteranordnung mit am Tragmittel gelagerten und geführten Antriebsmittel,
- Figur 18:: eine Roboteranordnung mit einem Kurbeltrieb und einer Lageverstellung,
- Figur 19:: eine Variante der Roboteranordnung mit einem Kurbeltrieb und einem anderen Untergrund,
- Figur 20 und 21:: eine weitere Variante der Roboteranordnung mit einem mehrachsig beweglichen Tragmittel an einem Ständer,
- Figur 22 bis 30:: Ausbildungsvarianten eines Kurbeltriebs,
- Figur 31 bis 35:: verschiedene Ausbildungsvarianten eines Tragmittels der Roboteranordnung,
- Figur 36:: ein Ausführungsbeispiel mit Zusammenwirken von mehreren Roboteranordnungen,
- Figur 37 bis 41:: verschiedene Bewegungsmöglichkeiten und Verlagerungsbewegungen einer Roboteranordnung,
- Figur 42 und 43:: eine komplexe Roboteranordnung mit Hilfsvorrichtung und Ablagen in Seitenansicht und Draufsicht und
- Figur 44 bis 46:: verschiedene Betriebsstellungen der Roboteranordnung von Figur 42 und 43.

Die Erfindung betrifft eine Roboteranordnung (1) und ein Verfahren zu deren Betrieb.

Die Roboteranordnung (1) weist einen ortsveränderlichen programmierbaren Roboter (2) auf, der mehrere miteinander beweglich verbundene Glieder (4,5,6,7) und entsprechende Bewegungsachsen (I - VII) aufweist. Der Roboter (2) ist auf einem beweglichen Tragmittel (15) angeordnet und kann mit diesem Verlagerungs- oder Versatzbewegungen (v) ausführen. Hierfür ist ein vom Roboter (2) betätigbarer Eigenantrieb (16) für das Tragmittel (15) vorgesehen. Der Eigenantrieb (16) wird durch eine Bewegung des Roboters (2), insbesondere durch eine Verlagerungsbewegung seines Endglieds (4), betätigt.

Für den Eigenantrieb (16) ist ein vom Roboter (2) betätigbares Antriebsmittel (27) vorgesehen, dass z.B. am Tragmittel (15) angeordnet ist und für das in den nachfolgend erläuterten Ausführungsbeispielen verschiedene Ausgestaltungsmöglichkeiten angegeben werden. Die Roboteranordnung (1) kann ein Positioniermittel (35) für die Ortsveränderung bzw. die Verlagerungsbewegung des Roboters (2) und seines Tragmittels (15) aufweisen.

Ferner kann für den Eigenantrieb (16) eine externe und relativ ortsfeste, insbesondere stationäre Gegenkraftabstützung (30) vorhanden sein, die mit dem Antriebsmittel (27) zur Übertragung der vom Roboter (2) ausgeübten Antriebskräfte und Antriebsbewegungen zur Erzielung der genannten Verlagerungsbewegung (v) zusammenwirkt. Das Positioniermittel (35) kann mit der Gegenkraftabstützung (30) zusammenwirken bzw. mit dieser kombiniert werden. Für die Gegenkraftabstützung (30) und das Positioniermittel (35) gibt es in den Ausführungsbeispielen ebenfalls verschiedene Varianten.

Das Tragmittel (15) ist an oder auf einem Untergrund (14) beweglich angeordnet und kann sich in einer oder in mehreren Richtungen oder Achsen bewegen. Dies können rotatorische und/oder translatorische Bewegungsachsen sein. Für die Kinematik und die konstruktive Ausbildung des Tragmittels (15) gibt es ebenfalls verschiedene Ausführungsformen.

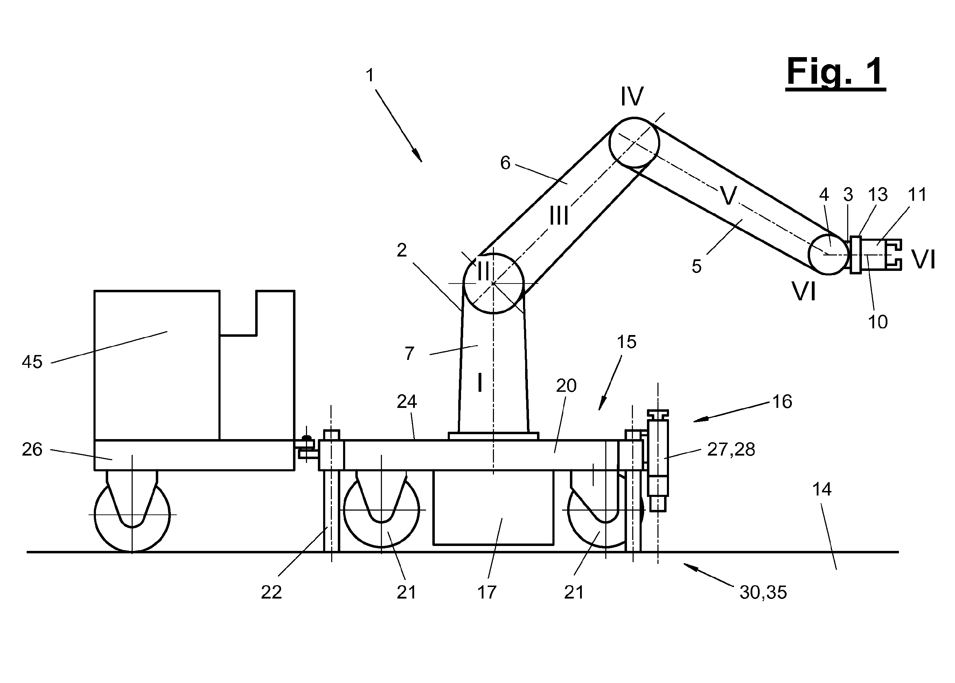

Figur 1 zeigt eine erste Ausführungsform einer Roboteranordnung (1) mit einem Tragmittel (15), das hier als Fahrwagen (20) ausgebildet ist, der mit mehreren Rollen oder Rädern (21) auf einem Untergrund (14), z.B. einem ebenen Boden, rollen kann. Die Räder (21) können zumindest teilweise schwenkbar gelagert sein, so dass der Fahrwagen (20) unter Einwirkung des Eigenantriebs (16) geradeaus oder in beliebigen Kurven sowie in beliebiger Richtung vorwärts oder rückwärts fahren und auch auf der Stelle drehen kann.

Das Tragmittel (15) besitzt eine Plattform (24), an der der Roboter (2) und die Räder (21) gelagert sind. Das Tragmittel (15) weist ferner eine Arretierung (22) auf, die ebenfalls an der Plattform (24) angeordnet sein kann und mit der das Tragmittel (15) arretiert werden kann. Die Arretierung (22) kann z.B. höhenverstellbare Stützfüßen aufweisen. Sie kann vom Roboter (2) betätigt, bzw. aktiviert und deaktiviert werden. Alternativ kann die Arretierung (22) einen eigenen steuerbaren Stellantrieb haben.

Im Ausführungsbeispiel von Figur 1 ist an das Tragmittel (2) ein Anhänger (26) lösbar und ggf. wechselbar angekuppelt, der z.B. eine Ablage (45) für Bauteile, Montagemittel oder dgl. trägt und der bei den Verlagerungsbewegungen mitbewegt wird.

Am Transportmittel (15) kann ferner eine Versorgung (17) an geeigneter Stelle, z.B. unter der Plattform (24) hängend angeordnet sein. Die Versorgung (17) kann verschiedene Komponenten beinhalten, z.B. eine mitgeführte Energieversorgung für einen Roboter (2) in Form einer Batterie oder dgl. Die Versorgung (17) kann auch eine Steuerung für einen Roboter (2) beinhalten. Die Versorgung (17) kann ferner weitere Betriebsmittel bereitstellen, z.B. Druckluft, Hydraulikflüssigkeit, Kühlmittel oder dgl..

Figur 1 zeigt in schematischer Darstellung eine bevorzugte Ausführungsform des mehrgliedrigen Roboters (2), der hier z.B. sieben Bewegungs- oder Roboterachsen (I-VII) besitzt. Die Achszahl kann auch kleiner oder größer sein. Die Glieder (4,5,6,7) sind unter Bildung rotatorischer Achsen (I-VII) mit entsprechenden Lagern und Achsantrieben gelenkig miteinander verbunden. Der gezeigte Roboter (2) hat kraftgesteuerte oder kraftgeregelte Roboterachsen (I-VII) bzw. Achsantriebe nebst einer zugeordneten und einwirkende Belastungen erfassenden Sensorik (nicht dargestellt). Der Roboter (2) kann außerdem mindestens eine nachgiebige Roboterachse (I-VII) mit einer Nachgiebigkeitsregelung, insbesondere einer reinen Kraftregelung oder einer Kombination aus Positions- und Kraftregelung, aufweisen. Die Sensorik weist z.B. an einigen oder allen Achsen (I-VII) einen Momentensensor auf und ist mit der Robotersteuerung verbunden. Die besagten Achsen können außerdem eine steuer- oder schaltbare Bremse aufweisen.

Der Roboter (2) besitzt ein Basisglied (7), das auf dem Tragmittel (15) unter Bildung einer ersten Roboterachse (I) drehbar gelagert ist. Am Basisglied (7) ist ein Zwischenglied (6) über die Roboterachse (II) angebunden. Das Zwischenglied (6) kann geteilt und um eine zentrale längsgerichtete Roboterachse (III) in sich verdrehbar sein. Über eine weitere Roboterachse (IV) ist ein zweites Zwischenglied (5) angebunden, das ebenfalls geteilt und in sich unter Bildung einer Roboterachse (V) verdrehbar sein kann. Das Zwischenglied (5) ist über eine Roboterachse (VI) mit einem Endglied (4) verbunden, welches z.B. als Roboterhand ausgebildet ist und ein bewegliches, insbesondere um eine Drehachse (10) rotierendes Abtriebselement (3) aufweist, an dem ein Werkzeug (11), z.B. ein steuerbares Greifwerkzeug, angeordnet ist. Die Drehachse (10) kann die Roboterachse (7) bilden.

Der gezeigte Roboter (2) kann als Leichtbauroboter ausgebildet sein, der aus leichtgewichtigen Materialien, z.B. Leichtmetall und Kunststoff, besteht und auch eine kleine Baugröße hat. Er kann ein niedriges Gewicht und eine entsprechend begrenzte Tragkraft haben, die z.B. bis zu 20 kg beträgt.

Der Eigenantrieb (16) und sein vom Roboter (2) betätigbares Antriebsmittel (27) können unterschiedliche konstruktive umd kinematische Ausgestaltungen haben.

Bei der Ausführungsform von Figur 1 ist das Antriebsmittel (27) als Abstützmittel (28) ausgebildet, welches vom Roboter (2) mit einem Werkzeug (11), z.B. einem multifunktionalen Greifwerkzeug, gegriffen und benutzt werden kann. Das Abstützmittel (28) dient zur Herstellung eines kraftaufnehmenden Kontakts mit einer externen, relativ ortsfesten Gegenkraftabstützung (30), die in Figur 1 nicht dargestellt ist. In der gezeigten Ausführungsform ist das Abstützmittel (28) z.B. als Steckbolzen mit einem aufrechten Schaft und einem an das Greifwerkzeug (11) angepassten Kopf am oberen Schaftende ausgebildet. Es ist mittels einer geeigneten Halterung am Tragmittel (15) lösbar gehalten.

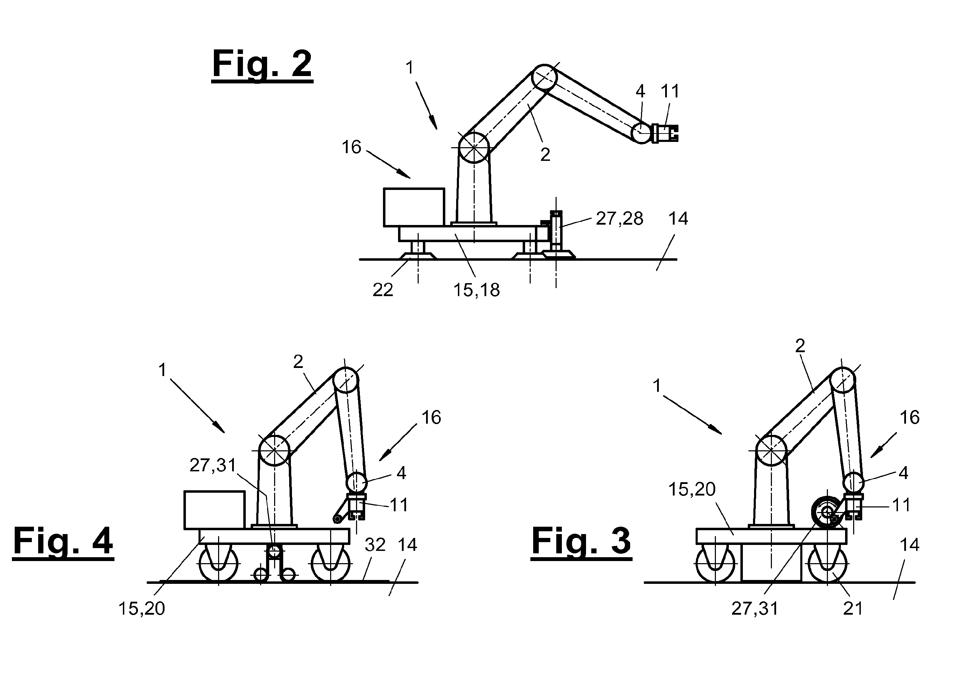

In der Variante von Figur 2 ist das Tragmittel (15) als Gleitmittel oder Schwebemittel (18) ausgebildet, welches z.B. mittels eines Luftkissens, eines distanzierenden Magnetfelds oder dgl. an oder auf einem Untergrund (14) in verschiedenen Achsen oder Richtungen bewegbar ist. Es kann ebenfalls durch den Eigenantrieb (16) des Roboters (2) auf beliebigen geraden oder gekrümmten Bahnen bewegt und gelenkt werden. Eine Arretierung (22) kann hierbei z.B. durch Ausschalten eines Luftkissens und Absetzen des Tragmittels (15) erfolgen. Die Ausbildung der Roboteranordnung (1) kann ansonsten die gleiche wie in Figur 1 sein, wobei insbesondere das Antriebsmittel (27) als Abstützmittel (28) ausgebildet ist.

Figur 3 zeigt eine Variante zu Figur 1 mit einem Fahrwagen (20), bei dem das Antriebsmittel (27) als Treibantrieb, z.B. Kurbelantrieb (31), ausgebildet ist, der am Tragmittel (15) angeordnet ist und zur Erzeugung einer Antriebsbewegung vom Roboter (2) mit einem geeigneten Werkzeug (11) betätigt wird. Dies kann z.B. das vorerwähnte Greifwerkzeug (11) sein, welches einen Ausleger oder dgl. anderes Mittel für einen lösbaren Eingriff mit einer Kurbel aufweist. Der Roboter (2) kann die Kurbel greifen und zur Erzeugung einer Antriebsbewegung drehen. Der Treib- oder Kurbelantrieb (31) wirkt in dieser Ausführungsform auf das Tragmittel (15) und dessen Relation zum Untergrund (14) ein und treibt z.B. ein oder mehrere Räder (21) drehend an. Damit ist eine relativ ungenaue oder grobe Positionierung des Roboters (2) gegeben.

In der Ausführungsform von Figur 4 ist die Roboteranordnung (1) mit einem Fahrwagen (20) und einer anderen Ausführungsform eines Kurbelantriebs (31) dargestellt. Sie wirkt mit einem relativ ortsfesten Treibelement (32), hier z.B. einem am Untergrund (14) angeordneten Riemen, insbesondere einem Zahnriemen, zusammen. Dies erlaubt eine genauere Roboterpositionierung und Bestimmung des Verlagerungswegs (v). Weitere Details werden nachfolgend erläutert.

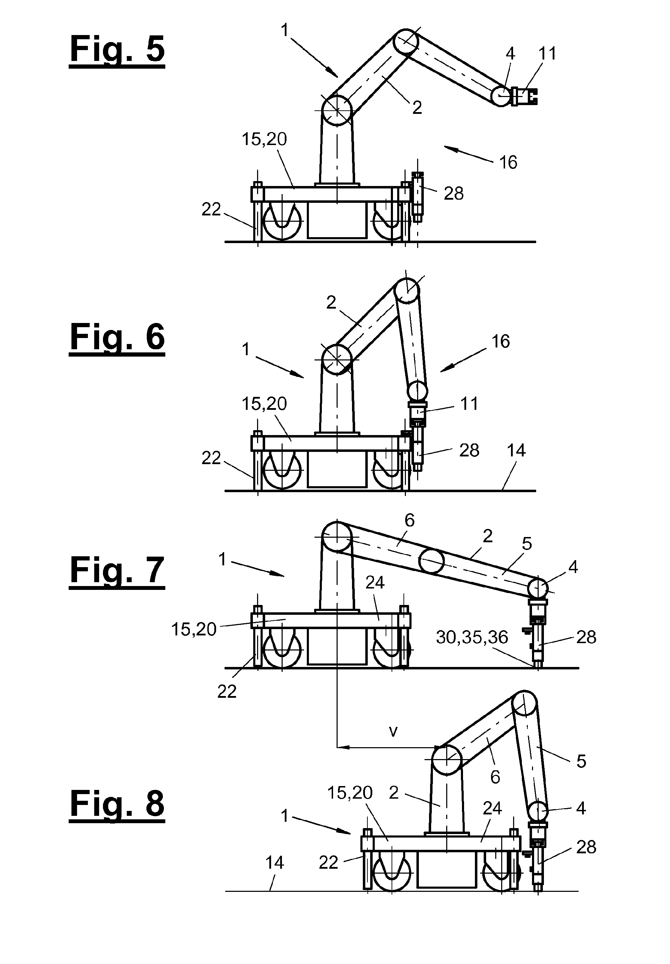

Figur 5 bis 8 verdeutlichen den Bewegungsablauf der Roboteranordnung (1) und des Eigenantriebs (16) bei der Durchführung einer Verlagerungs- oder Fahrbewegung. Figur 5 zeigt die Ausgangsstellung mit arretiertem Tragmittel (15). In der nächsten Phase von Figur 6 greift der Roboter (2) das Abstützmittel (28) und löst es vom Tragmittel (15). Anschließend nimmt der Roboter (2) gemäß Figur 7 eine Streckstellung ein und bringt das Abstützmittel (28) mit einer Gegenkraftabstützung (30) am Untergrund (14) in einen kraftübertragenden Eingriff. Dies kann durch Reibung, Haft- oder Magnetwirkung, Formschluss oder dgl. geschehen. Außerdem wird die Arretierung (22) gelöst. Aus der weit ausladenden Streckstellung mit gestreckten Gliedern (5,6) heraus führt der Roboter (2) anschließend eine Einklappbewegung seiner Glieder (5,6) durch, wobei er sich mit dem Tragmittel (15) zum temporär fixierten Abstützmittel (28) hinzieht. Figur 8 zeigt diese Endstellung und den dabei gegenüber Figur (7) ausgeführten Verlagerungs- oder Fahrweg (v).

Der Roboter (2) erkennt auf Grund seiner definierten Einklappbewegung den Verlagerungsweg (v) und seine Endposition gemäß Figur 8, insbesondere wenn die Gegenkraftabstützung (30) eine bekannte Position aufweist und ein Positioniermittel (35) bildet oder mit diesem zusammenwirkt. Aus dieser Endposition heraus, die ggf. arretiert wird, kann er anschließend wieder eine Streckstellung gemäß Figur 7 einnehmen und den Bewegungszyklus von Neuem beginnen.

Die Roboterbewegungen und die dadurch erzeugten Verlagerungsbewegungen (v) sind nach Richtung und Größe vom Roboter (2) steuerbar. Der Roboter (2) kann hierbei ggf. für eine Richtungsänderung auch Drehbewegungen auf der Plattform (24) ausführen und durch Zusammenwirken mit der Gegenkraftabstützung (30) Richtungsänderungen durchführen, insbesondere Kurven fahren.

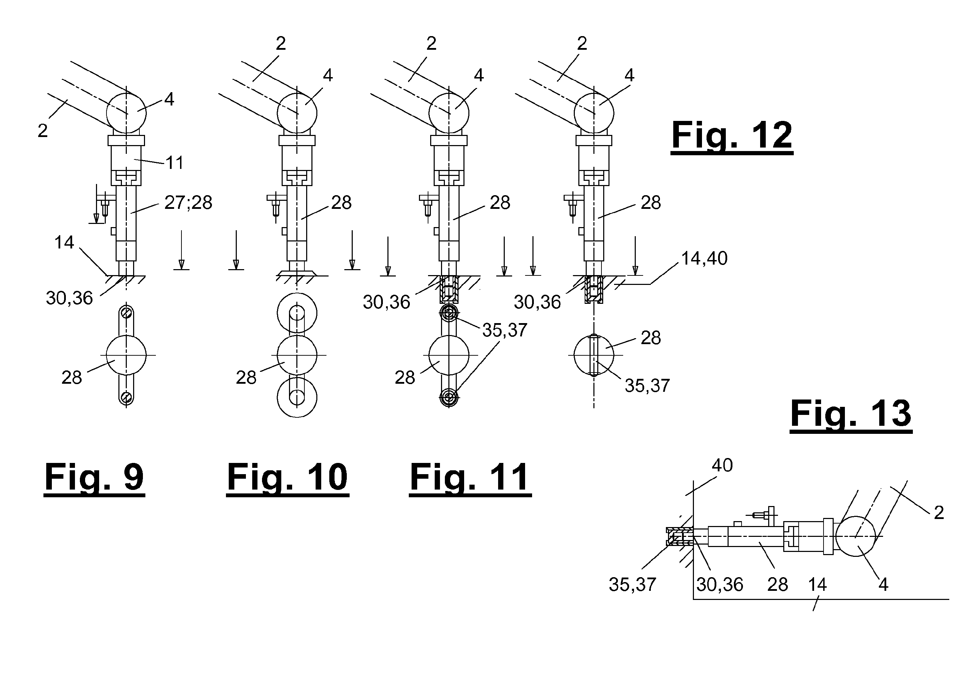

Figur 9 bis 13 verdeutlichen verschiedene Varianten einer Gegenkraftabstützung (30) und eines Positioniermittel (35) bei Einsatz eines Abstützmittels (28). Figur 9 bis 12 zeigen dabei jeweils eine Seitenansicht und eine geklappte Unteransicht.

Bei Figur 9 wird die Gegenkraftabstützung (30) durch Reibung gebildet. Das Abstützmittel (28) weist einen Querarm am unteren Schaftende des Abstützmittels (28) auf. Der Querarm erstreckt sich vom Schaftende aus nach verschiedenen Richtungen, hier z.B. nach zwei gegenüber liegenden Seiten und trägt am Ende jeweils ein Reibelement, welches gegen den Untergrund (14) angedrückt wird und die Gegenkraftabstützung (30) bildet. Durch die distanzierten Reibelemente ist auch die Drehstellung des Abstützmittels (28) bekannt und fixiert.

Bei einer Gegenkraftabstützung (30) durch Reibung ist der Referenzpunkt (36), an dem der Roboter (2) das Antriebs- bzw. Abstützmittel (27,28) positioniert, vom Roboter (2) vorgegeben, wobei die räumliche Punktlage am Untergrund (14) durch die bekannte Ausgangsposition des Roboters (2) und die bekannte Roboterbewegung definiert ist. Die Genauigkeit ist hierbei begrenzt, so dass der Roboter (2) sich bei seiner Verlagerungsbewegung (v) zu einem Zielort nur grob positionieren kann.

In der Variante von Figur 10 kommt ein ähnliches Abstützmittel (28) wie bei Figur 9 zum Einsatz, wobei hier die Reibelemente an den Querarmenden durch steuerbare Saugköpfe, steuerbare Magnete oder dgl. andere haftende Fixiermittel, ersetzt sind. Die Steuerung und Betätigung kann vom Roboter (2) aus erfolgen. Der Referenzpunkt (36) für die Gegenkraftabstützung (30) wird auch in diesem Fall vom Roboter (2) vorgegeben.

Figur 11 offenbart eine Variante des Abstützmittels (28) und der Gegenkraftabstützung (30) mit einem formschlüssigen Zusammenwirken. Das Positioniermittel (35) ist hierbei als Ausrichtmittel (37) ausgebildet. Das Abstützmittel (28) hat z.B. am Schaftende einen Zapfen, der in eine als Gegenkraftabstützung (30) wirkende Öffnung im Untergrund (14) mit einer Steckpassung eingeführt werden kann. Die Öffnung bildet einen Referenzpunkt (36) mit bekannter Lage am Untergrund (14) so dass sich hierüber der Roboter (2) referenzieren und seine Position sowie den Verlagerungsweg (v) genau bestimmen kann.

Wie Figur 11 verdeutlicht, können die Zapfen und Öffnungen mehrfach vorhanden sein, wobei die Zapfen sich wieder an einem Querarm am unteren Schaftende befinden können. Hierbei kann eine definierte Drehstellung des Abstützmittels (28) im Eingriff mit der Gegenkraftabstützung (30) hergestellt und ein Ausrichtmittel (37) gebildet werden. Dies steigert die Positioniergenauigkeit.

Das Ausführungsbeispiel von Figur 12 zeigt eine Variante des Abstützmittels (28) und der Gegenkraftabstützung (30) sowie des Ausrichtmittels (37). Bei Figur 11 waren die Öffnungen (30) z.B. rotationssymmetrisch, insbesondere zylindrisch ausgebildet. In der Variante von Figur 12 ist eine einzelne Öffnung (30) als Referenzpunkt (36) vorgesehen, die eine nicht rotationssymmetrische und z.B. längliche Formgebung hat. Am unteren Schaftende des Abstützmittels (28) ist ein entsprechend in der Form angepasster und z.B. länglicher Zapfen vorgesehen.

Der Untergrund (14) ist in den Ausführungsformen von Figur 9 bis 12 z.B. der Boden einer Halle oder dgl. Bei den Varianten von Figur 11 und 12 bildet der Untergrund (14) auch einen Referenzort (40) mit mehreren Referenzpunkten (36) mit definierter und bekannter Position. Der Untergrund (14) kann alternativ auch als Oberfläche eines Werkstücks ausgebildet sein.

In der Variante von Figur 13 ist der Referenzort (40) zur Bildung der Gegenkraftabstützung (30) z.B. eine aufrechte Wand. Hier können ein oder mehrere Referenzpunkte (36) gemäß Figur 11 und 12 nebst Ausrichtmittel (37) vorhanden sein. Die Gegenkraftabstützung (30) wird durch Öffnungen in der Wand gebildet.

In den Ausführungsbeispielen von Figur 11, 12 und 13 bilden die Gegenkraftabstützungen (30) und die Referenzpunkte (36) zugleich ein Positioniermittel (35), mit dem sich der Roboter (2) zur Durchführung der Verlagerungsbewegung (v) orientieren und positionieren kann.

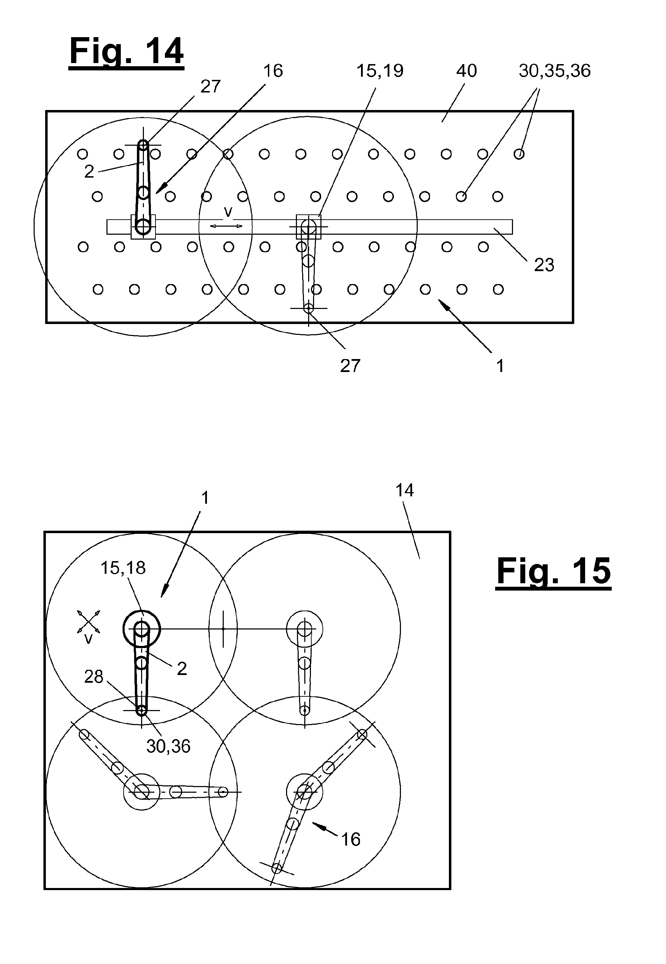

Figur 14 zeigt eine vorstehend bereits angesprochene Variante der Roboteranordnung (1) und des Eigenantriebs (16). Das Tragmittel (15) ist hier als Schlitten (19) ausgebildet und wirkt mit einer relativ ortsfesten, insbesondere stationären Führung (23), z.B. einer Führungsschiene, zusammen. Durch den Eigenantrieb (16) kann sich der Roboter (2) entlang der Führung (23) gesteuert bewegen. Figur 14 verdeutlicht auch die Mehrfachanordnung von Referenzpunkten (36) an einem Referenzort (40), der hier z.B. von einer Schablone gebildet wird, die mit Ortsbezug auf einem Werkstück angeordnet ist. Der Referenzort (40) kann auch direkt von einem Werkstück definiert werden. Die Referenzpunkte (36) mit der hier jeweils gebildeten Gegenkraftabstützung (30) bzw. dem Positioniermittel (35) sind in bekannter Position und Verteilung angeordnet, wobei sie z.B. in einem regelmäßigen Raster angeordnet sind.

Die Referenzpunkte (36) in Form von z.B. kreisrunden Öffnungen können auch eine Zusatzfunktion als Positionier-und Führungsmittel für ein vom Roboter (2) geführtes Bearbeitungswerkzeug (12), insbesondere Bohrwerkzeug, haben und einen definierten Ortsbezug zum Werkstück besitzen. Figur 14 zeigt verschiedene Bewegungsstellungen, die der Roboter (2) bei einer Verlagerungsbewegung (v) mit seinem Eigenantrieb (16) einnehmen kann. In Abwandlung der gezeigten Ausführungsform können an der Führung (23) auch mehrere Roboter (2) mit Schlitten (19) angeordnet sein. Figur 15 verdeutlicht eine Variante für beliebig gerichtete mehrachsige Verlagerungsbewegungen (v) einer Roboteranordnung (1), wobei das Tragmittel (15) hier z.B. als Gleit- oder Schwebemittel (18) ausgebildet ist. Es kann z.B. als Gleitplatte mit einem schaltbaren Magnet oder Saugelement bzw. einem Luftkissen mit Saugelement zur Fixierung und ggf. in Kombination mit Abstreifbürsten ausgebildet sein. Der Untergrund (14) wird z.B. vom Boden oder von einer Tisch-, oder Werkzeugplatte gebildet. Der Untergrund (14) kann ggf. auch in der zur Figur 14 beschriebenen Weise als Referenzort (40) in Schablonenausbildung mit Referenzpunkten (36) mit einem formschlüssigen Eingriff ausgebildet sein. Das Abstützmittel (28) und die Referenzpunkte (36) bzw. die Gegenkraftabstützung (30) können in der vorstehend beschriebenen Weise gemäß Figur 9 oder 10 ausgebildet sein. Figur 15 zeigt beispielhaft, welche unterschiedlichen Verlagerungsbewegungen bzw. Positionen der Roboter (2) mit seinem Tragmittel (15) nebst Eigenantrieb (16) ausführen bzw. einnehmen kann.

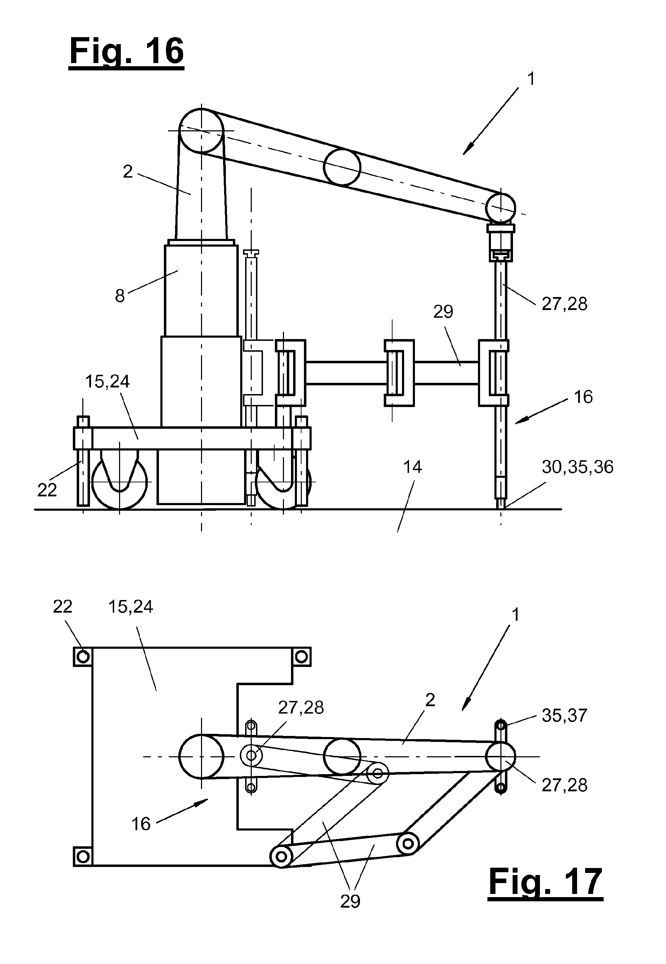

Figur 16 und 17 zeigen eine Abwandlung der Roboteranordnung (1) von Figur 1. Der Roboter (2) ist hier auf einem Sockel (8) mit Distanz zur Plattform (24) angeordnet. Das Abstützmittel (28) besitzt eine entsprechend größere Länge seines Schaftes. Um die beim Zusammenwirken mit der Gegenkraftabstützung (30) am Untergrund (14) entstehenden Kräfte und Momente besser aufnehmen und den Roboter (2) entlasten zu können, ist in diesem Ausführungsbeispiel das Abstützmittel (28) an einer Führung (29) angeordnet. Diese Führung (29) ist ihrerseits am Tragmittel (15), insbesondere an der Plattform (24) befestigt und gelagert. Die Führung (29) kann mehrere Arme und Gelenke aufweisen, die dem Abstützmittel (28) eine große und mehrachsige Beweglichkeit geben. Die Führung (29) ist mit dem Abstützmittel (28) fest oder ggf. drehbar verbunden und greift an dessen mittleren Bereich an, wobei die bei der Antriebsbewegung entstehenden Reaktionskräfte oder Reaktionsmomente von der Führung (29) und der Entlastung des Roboters (2) aufgenommen werden. In einer Ruhestellung kann das Abstützmittel (28) bei eingeklappter Führung (29) nahe am Sockel (8) in einer Ausnehmung der Plattform (24) aufgenommen werden.

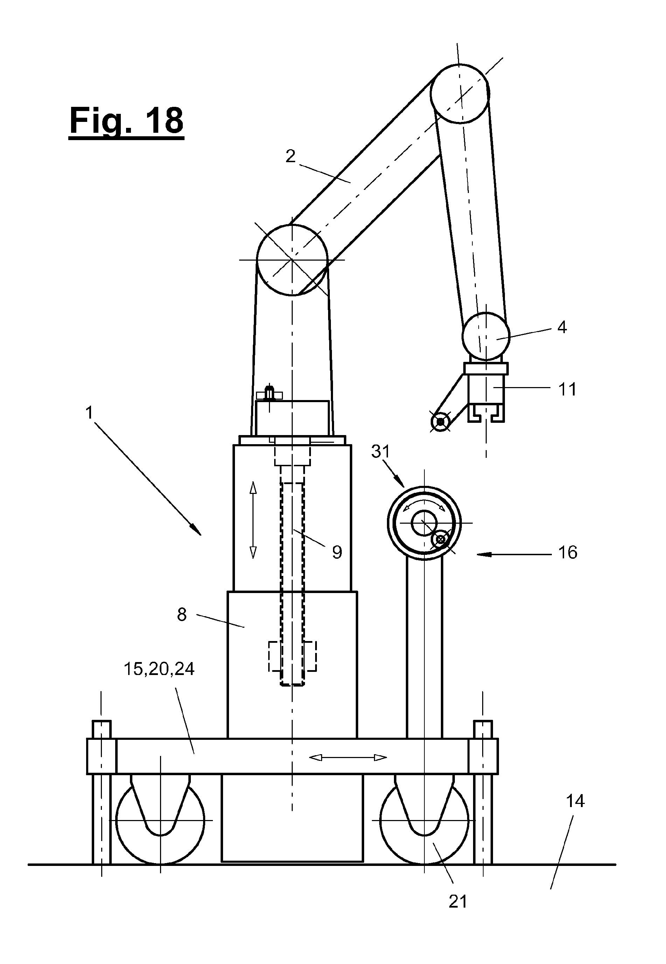

Figur 18 zeigt eine Variante der Roboteranordnung (1), bei welcher der Roboter (2) eine Lageverstellung (9) für eine Verschiebung relativ zur Plattform (24) aufweist. Dies ist z.B. eine Höhenverstellung mit einer Spindel und einem Kurbeltrieb, den der Roboter (2) selbst betätigen kann, um sich gesteuert und mit Positionsbezug in die gewünschte Höhenlage zu bringen. Der Roboter (2) kann hierbei wiederum auf einem Sockel (8) angeordnet sein.

Figur 18 zeigt auch einen entsprechend angepassten Kurbeltrieb (31), dessen Kurbel an einer entsprechend hohen Säule im Arbeitsbereich des Roboters (2) angeordnet ist. Hierbei wird mittels der Kurbel zumindest eines der Räder (21) angetrieben, welches auf einem Untergrund (14) rollt. Die Richtungsvorgabe kann z.B. über eine nicht dargestellte Führung erfolgen.

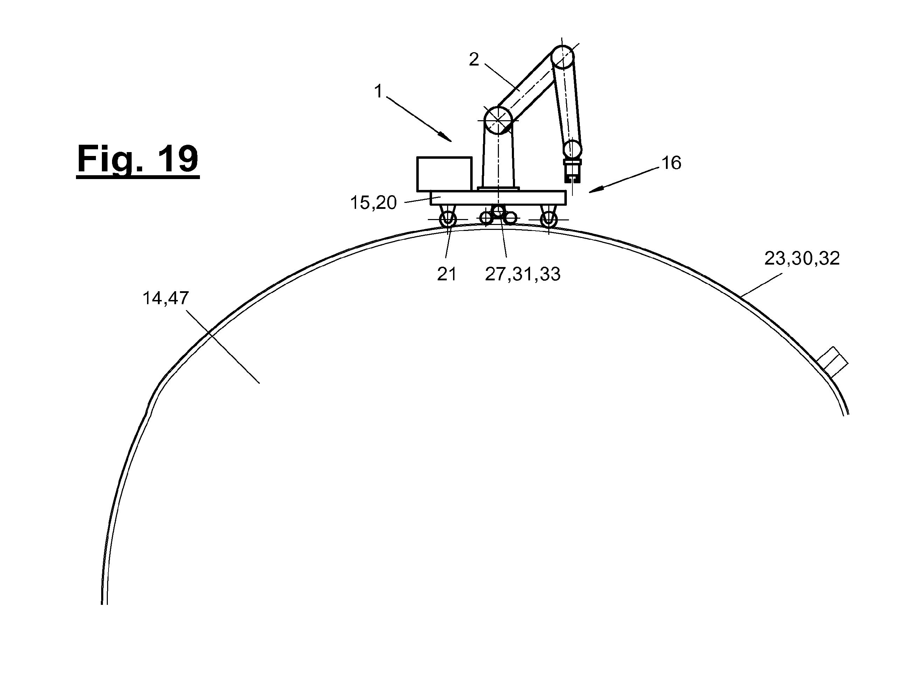

Figur 19 zeigt eine Variante der Roboteranordnung (1) auf einem anderen Untergrund (14), der hier z.B. als Werkstück (47) ausgebildet ist. Dies kann z.B. ein Rumpf eines Flugzeugs oder Schiffes sein. Das Werkstück (47) kann über eine beliebig geformte und insbesondere gekrümmte Kontur haben. Das Tragmittel (15) kann in beliebig geeigneter Weise ausgebildet sein, z.B. als Fahrwagen (20) mit Rädern oder Rollen (21), die auf der Werkstückoberfläche abwälzen.

Das Antriebsmittel (27) ist wieder als Kurbeltrieb (31) ausgebildet, der in diesem Fall mit einem relativ ortsfesten Treibelement (32), hier z.B. einem auf der Werkstückoberfläche angeordneten Riemen, insbesondere Zahnriemen, zusammenwirkt. Der Riemen (30) kann gespannt werden und bildet zugleich auch eine Führung (23) für das Tragmittel (15). Der Riemen oder Zahnriemen (32) ist am Tragmittel (15) über ein Treibrad (33), insbesondere ein Ritzel, des dortigen Kurbelantriebs (31) geführt. Der Roboter (2) setzt das Treibrad (33) mit einer nicht dargestellten Kurbel in Drehbewegung.

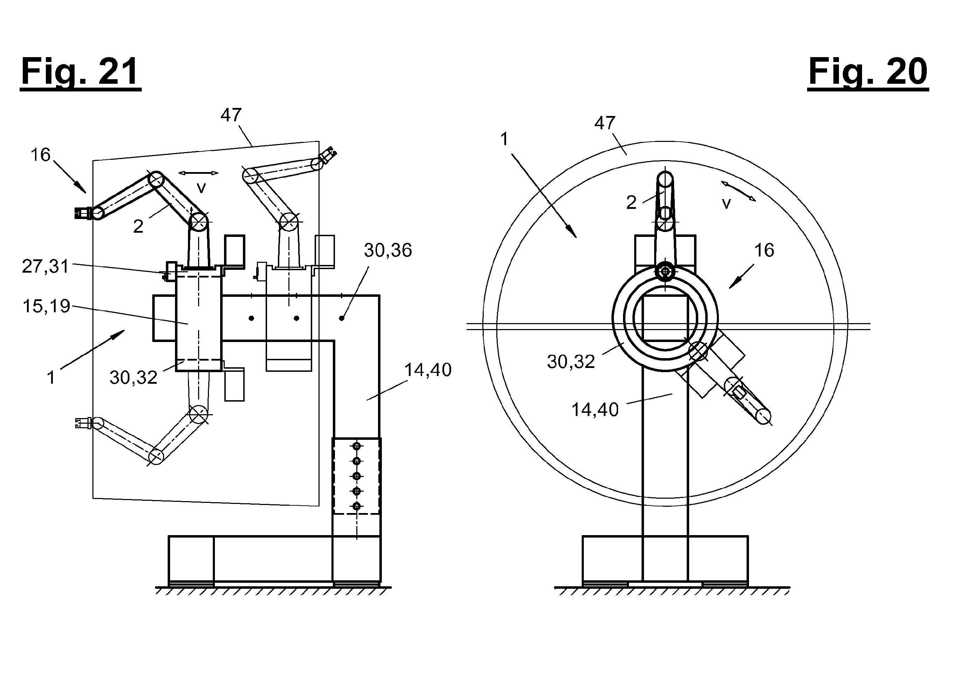

Figur 20 und 21 zeigen eine weitere Variante der Roboteranordnung (1) in geklappten Ansichten. Der Untergrund (14) bzw. Referenzort (40) ist hier als Gestell oder Ständer ausgebildet, der ein Basisteil, einen aufrechten und ggf. höhenverstellbaren Stützarm und einen horizontalen Ausleger aufweist, an dem das Tragmittel (15) mit einem Roboter (2) angeordnet ist. Das Tragmittel (15) ist hier als Schlitten (19) ausgebildet, der mehrachsige Verlagerungsbewegungen (v) ausführen kann. Dies können eine Drehbewegung um die z.B. zentrale Achse des Auslegerarms und eine lineare Fahrbewegung entlang des Auslegers sein. Der Schlitten (19) kann hierfür eine Dreheinrichtung mit drehfester Abstützung seiner Basis am Ausleger und mit einem Drehring aufweisen, auf dem der Roboter (2) angeordnet ist. Das Antriebsmittel (27) kann als Kurbelantrieb (31) mit einem z.B. als Zahnkranz ausgebildeten Treibelement (32) an der Basis und einem Ritzel (33) ausgeführt sein. Der Roboter (2) kann hier wieder die Kurbel für den Kurbelantrieb (31) selbsttätig bedienen.

Für Versatzbewegungen (v) längs des Auslegers mit dem Schlitten (19) kann der Roboter (2) ein anderes Antriebsmittel (27) benutzen, z.B. das vorbeschriebene Abstützmittel (28), wobei die Gegenkraftabstützung (30) hierfür durch Öffnungen und Referenzpunkte (36) am Ausleger gebildet wird. Der Roboter (2) kann sich durch diesen Eigenantrieb (16) relativ zu einem Werkstück (47) bewegen, welches z.B. eine Rohrform hat und den Roboter (2) und den Ausleger außenseitig umgibt. Eine solche Anordnung ist z.B. geeignet, um innerhalb eines Flugzeug-oder Schiffsrumpfes Handhabungs- oder Bearbeitungsprozesse oder dgl. auszuführen.

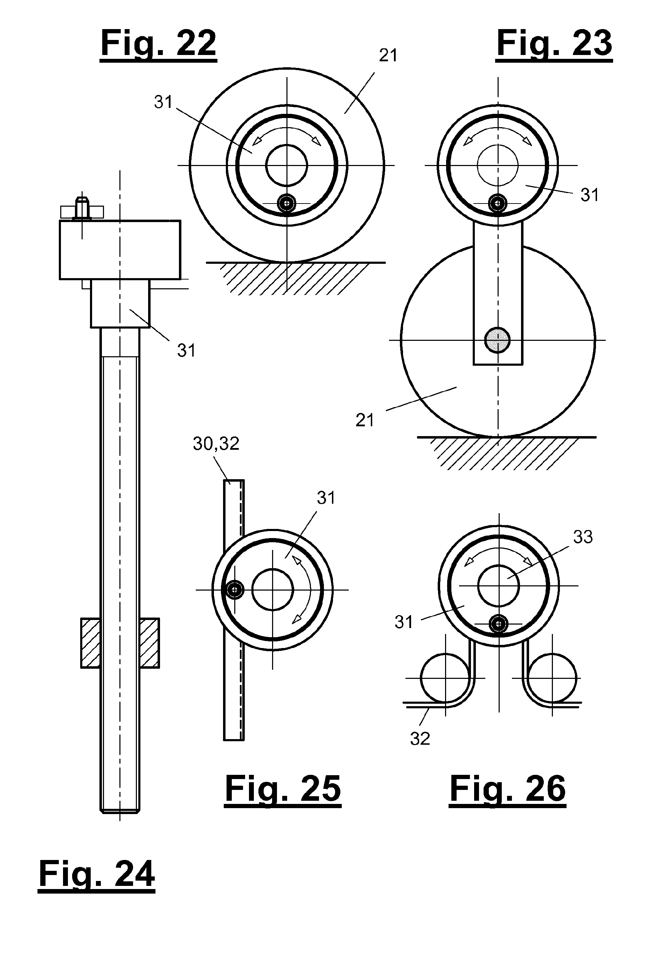

Figur 22 bis 30 zeigt verschiedene Varianten für die Ausbildung eines Kurbeltriebs (31). In Figur 22 ist ein Kurbeltrieb (31) mit einer drehbaren Kurbel angezeigt, der direkt an einem Rad (21) eines Tragmittels (15) gleichachsig angeordnet ist und diese unmittelbar dreht. Bei Figur 23 ist der Kurbeltrieb (23) mit Höhenversatz über dem angetriebenen Rad (21) angeordnet, wobei ein Getriebe zur Kraftübertragung zwischengeschaltet sein kann. Figur 24 zeigt einen Kurbeltrieb (30) mit einer Gewindespindel mittels der eine aufgezogene Spindelmutter zu Zwecken des Eigenantriebs (16) oder ggf. auch für eine Lageverstellung (9) axial bewegt wird. Figur 25 zeigt den Kurbeltrieb (31) mit einem Treibelement (32), z.B. einer Zahnstange oder Schneckenwelle, mit dem eine Gegenkraftabstützung (30) gebildet werden kann.

In der Variante von Figur 26 ist ein Kurbeltrieb (31) in Kombination mit einem Riementrieb dargestellt, wobei das relativ ortsfeste und eine Gegenkraftabstützung (30) bildende Treibelement (32), hier ein Riemen oder Zahnriemen, in der Ω-Führung mittels Spann- und Umlenkrollen über ein Treibrad oder Ritzel (33) mit treibendem Eingriff geführt ist. Das Treibrad (33) wird mittels einer Kurbel des Kurbeltriebs (31) vom Roboter (2) in Drehung setzt. Eine solche Anordnung kann bei der Ausführungsform von Figur 19 eingesetzt werden.

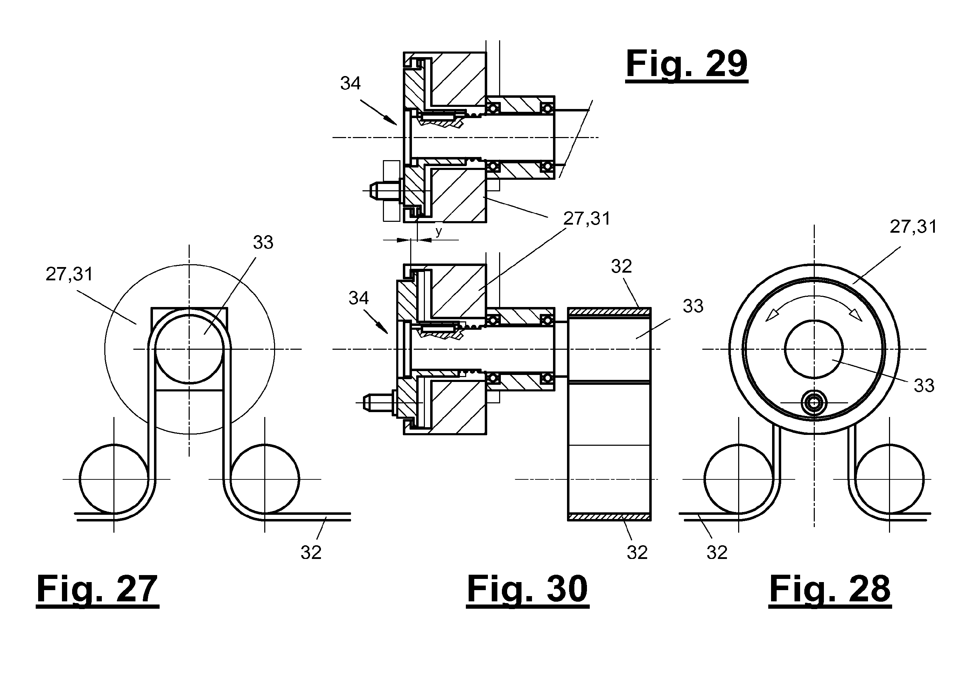

Figur 27 bis 30 zeigen eine solche Kurbel- und Riementriebanordnung in verschiedenen anderen Ansichten. Hier ist außerdem in Figur 29 und 30 eine Sicherung (34) dargestellt, welche den Kurbeltrieb (31) bei Nichtbetätigung durch den Roboter (2) arretiert. Hierfür muss z.B. der Roboter (2) die verschieblich auf dem Kurbelzapfen angeordnete Kurbelscheibe in Axialrichtung eindrücken und dabei eine Stirnverzahnung gegenüber einem umgebenden relativ ortsfesten Lagergehäuse lösen. Zugleich wird eine Rückstellfeder gespannt, die bei Freigabe der Kurbel durch den Roboter (2) die Kurbelscheibe wieder in den besagten Verzahnungseingriff schiebt. Die Kurbelscheibe ist hierfür auf dem Kurbelzapfen drehfest und axial verschieblich geführt. Eine solche Sicherung (34) kann auch in anderer Weise ausgebildet sein.

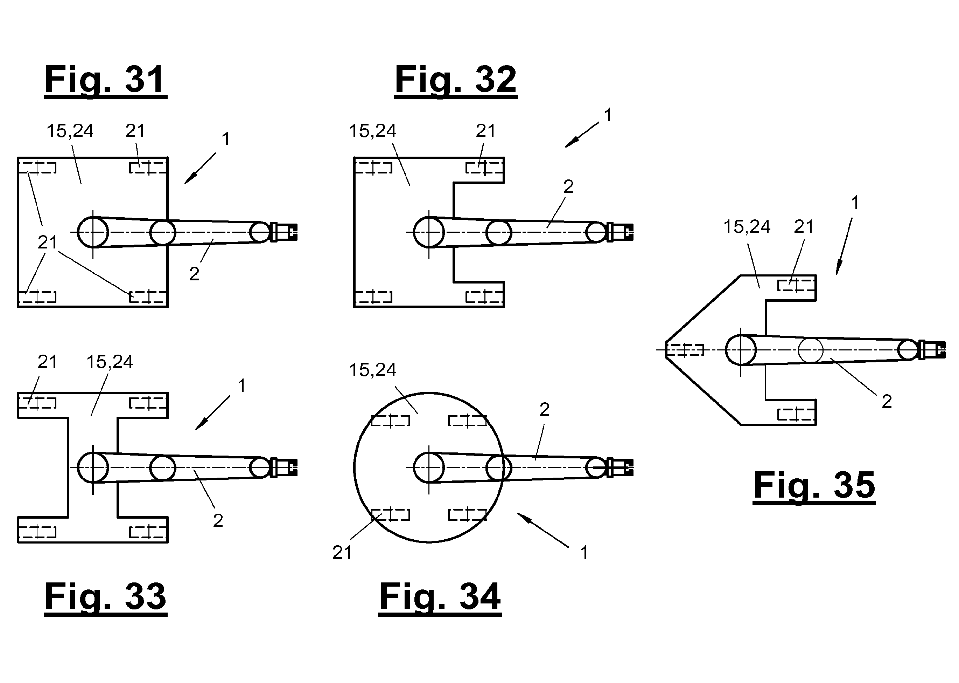

Figur 31 bis 35 zeigen verschiedene Varianten in der Gestaltung einer Plattform (24) und eines Tragmittels (15). Hierbei sind auch verschiedene Anordnungen von Rädern (21) dargestellt. Entsprechende Gestaltungen können auch für andere Gleit- oder Schwebemittel mit Luftkissen, Magneten, Saugern oder dgl. eingesetzt werden. Die Plattformen können eine prismatische oder runde Form und Außenkontur haben. Hierbei sind auch Ausschnitte zur Bildung einer C- oder H-Form möglich. Ferner kann eine Plattform (24) an einer oder mehreren Stellen eine konische Formgebung aufweisen. Die Räder- oder Gleitelementzahl kann z.B. drei oder vier betragen.

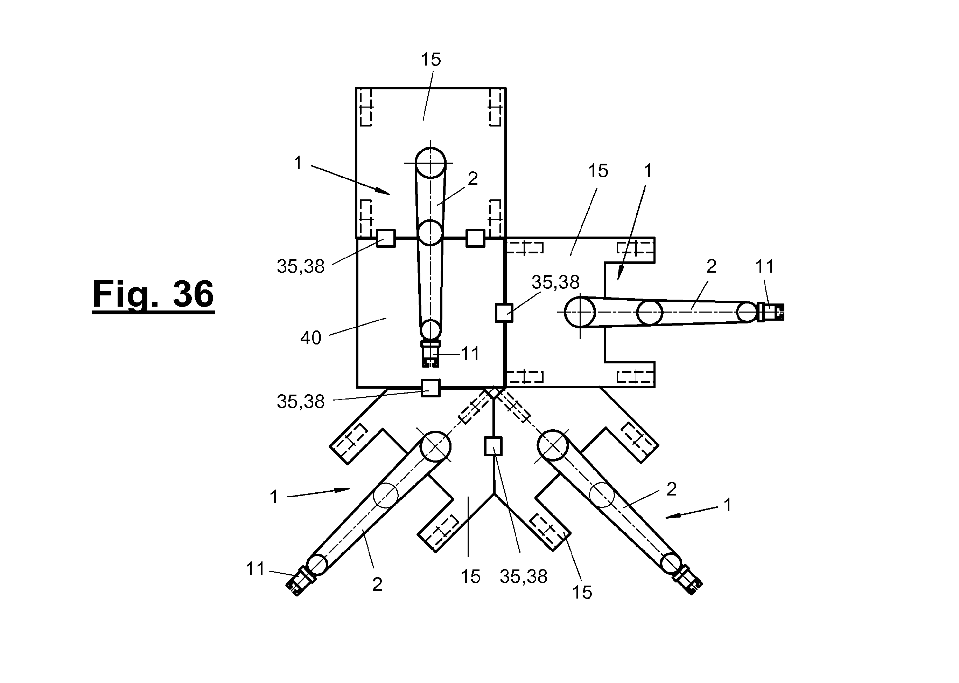

Figur 36 zeigt einen Einsatzfall, bei dem mehrere Roboteranordnungen (1) der vorbeschriebenen Art zur Durchführung eines Prozesses zusammenwirken und sich hierfür gemeinsam an einem, z.B. einem Werkstück, einem Tisch oder einer sonstigen Arbeitsstelle positionieren. Die Roboteranordnungen (1) haben dabei die vorbeschriebenen Eigenantriebe (16), mit denen sie sich zum Zielort und Referenzort bewegen und sich dabei mehr oder weniger genau bzw. grob oder fein positionieren.

Um für den Prozess eine Feinpositionierung in einer Andockstellung am Referenzort (40) oder auch in einer gegenseitigen Andockstellung zu erreichen, kann ein entsprechend genaues Positioniermittel (35) vorgesehen sein. Dies kann z.B. als Absteckung (38) zur formschlüssigen und lösbaren Verbindung zwischen einem Tragmittel (15) und dem Referenzort (40) oder auch von Tragmitteln (15) untereinander ausgebildet sein. Die Roboter (1) können mit ihrer Sensitivität und dem Eigenantrieb (26) die zugehörige Absteckung (38) taktil suchen und den formschlüssigen Eingriff zur Positionierung und Ausrichtung herstellen.

Durch die vorgenannte und in Figur 35 gezeigte Dreiecks-oder zumindest partielle Konusform eines Tragmittels (15), insbesondere seiner Plattform (24), kann eine dichte Positionierung der Roboteranordnungen (1) und ihrer Roboter (2) an der Peripherie des Referenzortes (40) bzw. untereinander erfolgen. Die Roboter (2) können dadurch allesamt aus einer vorgegebenen exakten Position ein am Referenzort (40) befindliches Werkstück bearbeiten, handhaben oder sonstige Prozesse daran ausführen.

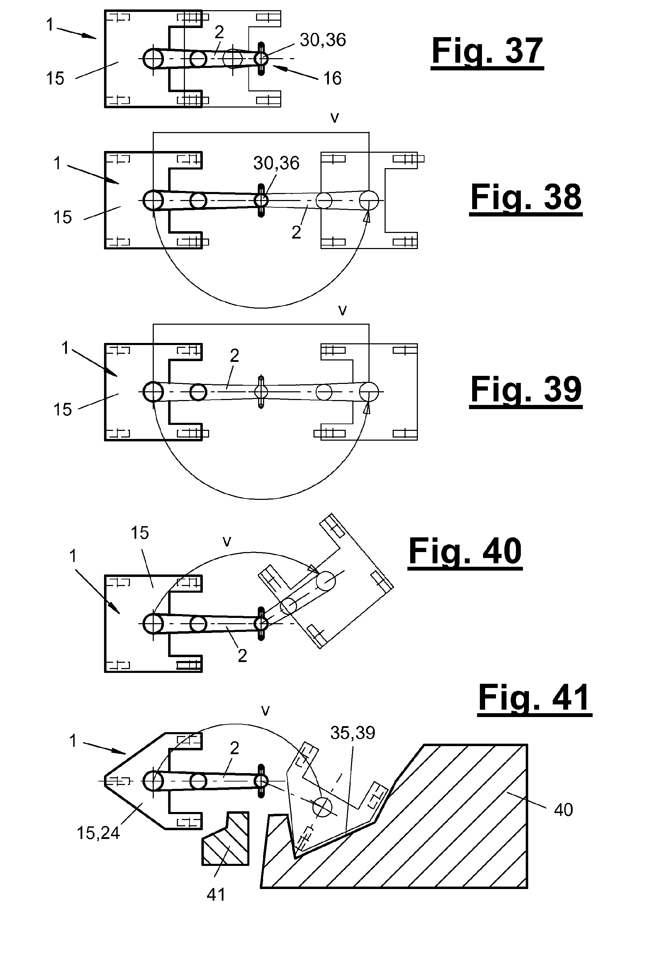

Figur 37 bis 41 zeigen schematisch verschiedene beispielhafte Überlagerungs- oder Versatzbewegungen (v), die eine Roboteranordnung (1) mit ihrem Eigenantrieb (16) ausführen kann. Bei Figur 37 ist dies eine lineare Bewegung, wie sie auch bei Figur 5 bis 8 gezeigt ist. Figur 38 zeigt eine lineare Fahrbewegung mit vergrößertem Hub, wobei sich der Roboter (2) an einer Gegenkraftabstützung (30) bzw. einem Referenzpunkt (36) erst ziehend und dann schiebend abstützt. Der Roboter (2) führt dabei eine 180°-Drehung auf der Plattform (24) aus.

Der Bewegungs- und Antriebsablauf in Figur 39 ist ähnlich, wobei allerdings das Tragmittel (15) seinerseits eine 180°-Drehung ausführt. Figur 40 zeigt eine andere Drehstellung und Schwenkbewegung (v). In der Variante von Figur 41 ist ebenfalls eine gekrümmte Versatzbewegung (v) mit Schwenkbewegung des Tragmittels (15) und des Roboters (2) dargestellt.

Figur 41 zeigt außerdem eine Variante eines Positioniermittels (35) an einem Referenzort (40). Das Positioniermittel (35) ist hier als formschlüssige, konturierte Aufnahme (39) am Referenzort (40) gestaltet, wobei die Aufnahmeform mit der Außenkontur des Tragmittels (15), insbesondere seiner Plattform (24), formschlüssig zusammenwirkt. Das Ausführungsbeispiel verdeutlicht außerdem, wie eine Roboteranordnung (1) mit einer gekrümmten Versatzbewegung (v) ein Hindernis (41) umgehen kann.

In den vorbeschriebenen Ausführungsbeispielen ist die Roboteranordnung (1) mit dem Eigenantrieb (16) des Roboters (2) in verschiedenen Varianten dargestellt. Der Roboter (2) kann an der Arbeitsstelle bzw. am Einsatzort beliebige Prozesse ausführen. Hierfür kann er das bereits zum Eigenantrieb (16) benutzte Greifwerkzeug (11) verwenden. In einem solchen Fall führt der Roboter (2) in erster Linie Handhabungsaufgaben durch. Das Werkzeug (11) kann dabei auch multifunktional ausgebildet sein und kann neben Greifelementen auch weitere Funktions- oder Bearbeitungselemente aufweisen, z.B. den gezeigten Ausleger mit Greifmittel zur Kurbelbetätigung. Andere Funktionselemente können Fügewerkzeuge oder dgl. sein. In den gezeigten Ausführungsformen kann das Werkzeug (11) fest am Endglied (4), insbesondere an dessen Abtriebselement (3), angeordnet sein.

Alternativ kann am Endglied (4) bzw. Abtriebselement (3) eine in Figur 1 angedeutete Wechselkupplung (13) angeordnet sein, welche einen automatischen Werkzeugwechsel ermöglicht. Der Roboter (2) kann dadurch seinen Prozessumfang erweitern.

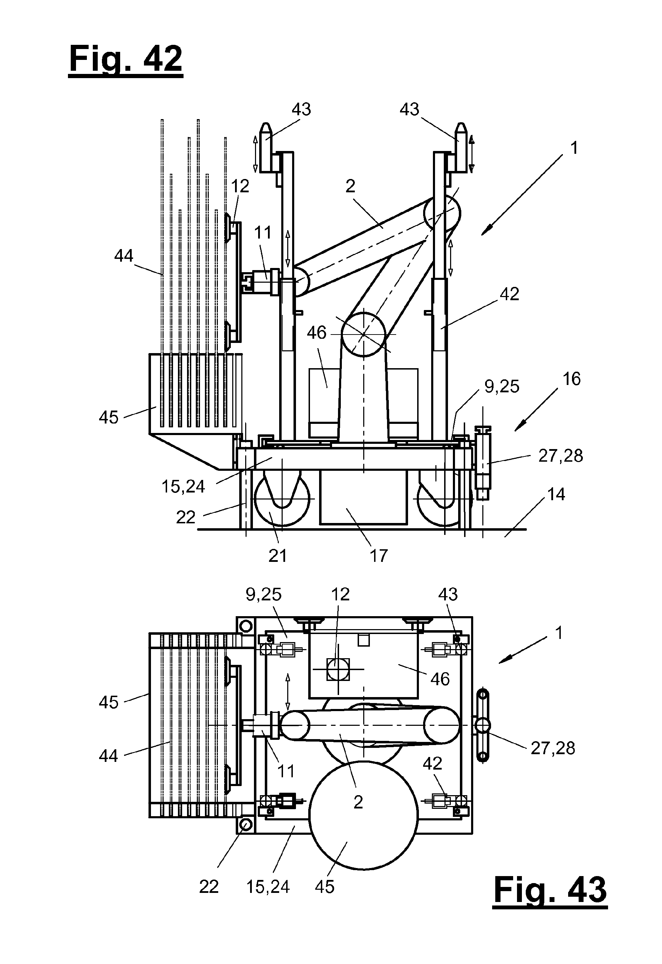

Figur 42 bis 46 verdeutlichen eine höher aufgerüstete und komplexe Roboteranordnung (1), bei welcher der Roboter (2) mehrere unterschiedliche Prozesse durchführen kann. Der Eigenantrieb (16) kann dabei entsprechend der vorherigen Ausführungsbeispiele gestaltet sein. Die Variante von Figur 42 bis 46 verdeutlicht außerdem weitere konstruktive Abwandlungen der Roboteranordnung (1).

Der Roboter (2) kann z.B. eine andere und ggf. zusätzliche Art von Lageverstellung (9) haben. Sie kann der Seitenverstellung auf der Plattformoberfläche dienen und einen arretierbaren Schwimmrahmen (25) aufweisen. Der Roboter (2) kann sich hier bei positioniertem und arretiertem Tragmittel (15) in eine veränderliche Position gegenüber dem Werkstück (47) bringen und sich gegenüber einem dortigen Bezugsort justieren. Der Roboter (2) oder ein Stellmittel kann für die Arretierung des Schwimmrahmens (25) sorgen.

Das Ausführungsbeispiel verdeutlicht außerdem eine Variante in der Werkzeugausbildung. Der Roboter (2) führt hier das in den vorherigen Ausführungsbeispielen beschriebene Greifwerkzeug (11). Dieses kann außer einem Abstützmittel (28) ggf. auch weitere Werkzeuge (12) greifen und führen. Dies können z.B. Handhabungs- und Greifwerkzeuge zum Halten und Führen von Bauteilen (44) oder Bearbeitungswerkzeuge oder Fügewerkzeuge oder dgl. sein. Das Greifwerkzeug (11) ist einem solchen Fall als Universalgreifer ausgebildet, der verschiedene Greiffunktionen hat und dabei auch als Kupplungsmittel zum Aufnehmen und Bedienen weiterer Werkzeuge fungieren kann. Am Tragmittel (15) kann eine Ablage (46) für ein oder mehrere Werkzeuge (12) vorhanden sein. In Abwandlung der gezeigten Ausführungsform kann die vorerwähnte Wechselkupplung vorhanden sein, mit welcher der Roboter (2) die Werkzeuge (12) direkt aufnehmen und automatisch wechseln kann.

An Tragmittel (15) kann mindestens eine weitere, ggf. lösbare Ablage (45) angeordnet sein, die z.B. zur Aufnahme der dargestellten Bauteile (44) in Form von Blechen dienen kann. Eine Ablage (45) kann auch Kleinteile wie Schrauben oder dgl. aufnehmen.

In der gezeigten Ausführungsform ist auf dem Tragmittel (15) außerdem eine Hilfsvorrichtung (42) angeordnet, die beweglich und steuerbar ist und die mit dem Roboter (2) zusammenwirken kann. Die Hilfsvorrichtung (42) kann zur Prozessunterstützung dienen und kann z.B. für die Bewegung und/oder Positionieren von einem Bauteil (44) dienen. Die Hilfsvorrichtung (42) weist hierfür z.B. ein Gestell mit mehreren ggf. höhenverstellbaren Säulen auf, an deren Enden Halte- oder Andrückelemente (43) oder sonstige Funktionselemente angeordnet sein können, die ggf. eine eigene Stellachse aufweisen und ebenfalls steuerbar sind. Die Hilfsvorrichtung (42) kann zur Sicherung eines Lagebezugs gemeinsam mit dem Roboter (2) auf einem Schwimmrahmen (25) angeordnet sein.

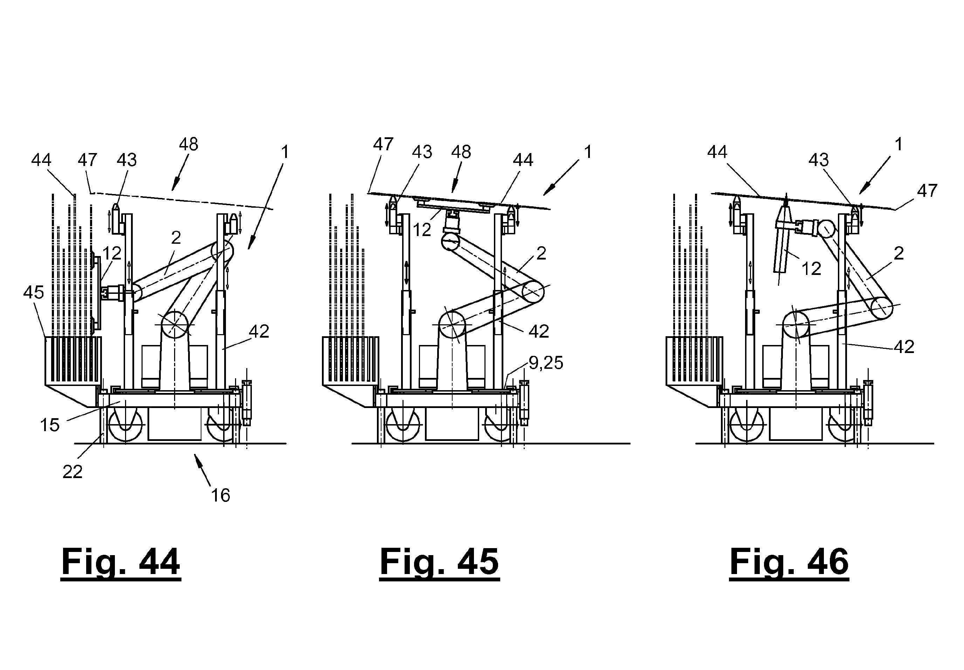

Figur 44 bis 46 verdeutlichen beispielhaft einen Funktions- und Prozessablauf einer solchen Roboteranordnung (1), wobei an der Öffnung (48) eines Werkstücks (47), z.B. eines Flugzeugrumpfes, ein Bauteil (44) in Form eines Deckels befestigt werden soll.

Im ersten Schritt gemäß Figur 44 ist die Roboteranordnung (1) mit dem Eigenantrieb (16) zum vorgesehenen Einsatzort am Werkstück (47) bewegt und dort positioniert sowie arretiert worden. Der Roboter (2) nimmt mit seinem Greifwerkzeug (12) ein Bauteil (44) aus der Ablage (45) auf. Anschließend bewegt er gemäß Figur 45 das Bauteil (44) in die korrekte Montagestellung am Werkstück (47) und dessen Öffnung (48). Die anschließend aktivierte Hilfsvorrichtung (42) hält das Bauteil (44) in dieser Lage und drückt es gegen das Werkstück (47). Der Roboter (2) kann dann sein Handhabungswerkzeug (12) vom Bauteil (44) lösen und es gegen ein anderes Werkzeug (12), z.B. ein Fügewerkzeug austauschen, mit dem er anschließend gemäß Figur 46 das von der Hilfsvorrichtung (42) in Position gehaltene Bauteil (44) am Werkstück (47) fügt, z.B. annietet oder anschraubt.

Der Schwimmrahmen (25) kann bei dieser Positionierung behilflich sein. Beispielsweise kann die Hilfsvorrichtung (42) nach Aufnahme des Bauteils (44) vom Roboter (2) zunächst ausfahren und sich mit Hilfe des Schwimmrahmens (25) am Werkstück (47) über geeignete Referenzpunkte positionieren, wobei zugleich auch der Roboter (2) in Position gebracht werden kann. Der Schwimmrahmen (25) kann anschließend arretiert werden. In einer Abwandlung ist es möglich, dass die Fein-Positionierung mit Hilfe des Schwimmrahmens (25) vom Roboter (2) durchgeführt wird, wobei die Hilfsvorrichtung (42) mitgenommen wird.

Für den Weg der Roboteranordnung (1) zum nächsten vorgesehenen Einsatzort, z.B. Montageort, am gleichen Werkstück (47) kann wieder der Eigenantrieb (16) benutzt werden. Auch komplexe mehrteilige Prozesse, insbesondere Handhabungs-, Montage- oder Bearbeitungsprozesse, an mehreren Stellen eines Werkstücks (47) oder an einer bereit gestellten Mehrfachanordnung von Werkstücken (47) können auf diese Weise automatisiert werden.

Für längere Wege, z.B. zur Rückkehr in die Ausgangsposition an einem ggf. gewechselten Werkstück (47) kann das Tragmittel (15) auch von einem Werker manuell oder mit einem angekuppelten Schleppantrieb bewegt werden. Abwandlungen der gezeigten und beschriebenen Ausführungsbeispiele sind in verschiedener Weise möglich.

Auf einem Tragmittel (15) können mehrere Roboter (2) angeordnet sein, wobei ein oder mehrere Roboter für den Eigenantrieb (16) benutzt werden. Ein Roboter (2) kann in beliebig anderer geeigneter Weise ausgebildet sein und kann positionsgesteuerte Achsen aufweisen. Die Zahl, Ausbildung und Kombination der Roboterachsen ist beliebig wählbar, wobei insbesondere diese Achsen als translatorische und/oder rotatorische Achsen ausgebildet sein können. Die Roboteranordnung (1) kann ferner eine andere Art von Versorgungsmitführung haben. Die Betriebsmittel, insbesondere Leistungs- und Signalströme, Fluide und dgl. können über einen Leitungsschlepp, Schleif- oder Bahnkontakte oder dgl. während der Versatzbewegung (v) mitgeführt werden. Ferner ist ein Andocken an örtlichen Versorgungsstellen möglich.

In Variation der gezeigten Ausführungsbeispiele kann das Tragmittel (15) bei geeigneter Ausbildung hängend an einer Decke oder an einer aufrechten Wand angeordnet sein und hier entlang bewegt werden. Ein Werkzeug (11,12) kann beweglich und steuerbar sein, wobei die Ansteuerung und die Betriebsmittelversorgung vom Roboter (2) aus erfolgt. Alternativ kann eine Betriebsmittelversorgung von außen geschehen. Bei einer Anordnung und Bewegung an einer schrägen oder vertikalen Wand kann die Roboteranordnung (1) eine Gewichtskompensation, z.B. ein Balancer, für das Tragmittel (15) und den Roboter (2) vorsehen.

Die Antriebsmittel (27) können ebenfalls abgewandelt werden. Wenn der Roboter (2) sich an einer Gegenkraftabstützung (30) temporär festhält, kann er hierfür z.B. sein Greifwerkzeug (11) benutzen und externe, relativ ortsfeste Referenzpunkte (36) in Gestalt von Vorsprüngen greifen. Ein Treibantrieb (31) kann als Ratschenantrieb mit oszillierender Antriebsbewegung, z.B. ähnlich einer Draisine, oder in anderer geeigneter Weise ausgebildet sein.

Eine Referenzierung des Roboters (2) an einem Werkstück zur Durchführung eines dortigen Prozesses kann in der vorbeschriebenen Weise taktil unter Nutzung der integrierten Sensorik und der Sensitivität des Roboters (2) erfolgen. Alternativ oder zusätzlich kann eine externe Sensorik, z.B. ein Kameramesssystem oder Vision-System in Verbindung mit der Robotersteuerung eingesetzt werden.

Ein bevorzugter Einsatzbereich der Roboteranordnung (1) sind Fertigungsanlagen im Fahrzeugbau, insbesondere im Rohbau oder in der Montage, oder im Flugzeugbau. Andere Einsatzmöglichkeiten bestehen bei Logistiksystemen, z.B. bei Regallagern, in Supermärkten oder dgl. Ein mit Sensitivität ausgestatteter Roboter (2) bietet hierbei auch Vorteile hinsichtlich der Unfall- und Kollisionssicherheit.

Im weiteren können die gezeigten Ausführungsbeispiele und ihre Merkmale beliebig miteinander kombiniert und vertauscht werden, um andere abgewandelte Ausführungsformen zu bilden.

### BEZUGSZEICHENLISTE

- 1: Roboteranordnung
- 2: Roboter, Leichtbauroboter, ortsveränderlich
- 3: Abtriebselement, Abtriebsflansch, Drehflansch
- 4: Glied, Endglied, Hand
- 5: Glied, Zwischenglied
- 6: Glied, Zwischenglied
- 7: Glied, Basisglied
- 8: Sockel
- 9: Verstellung, Lageverstellung, Höhenverstellung
- 10: Drehachse
- 11: Werkzeug, Greifwerkzeug
- 12: Werkzeug, Bearbeitungswerkzeug
- 13: Wechselkupplung
- 14: Untergrund, Boden, Werkstück
- 15: Tragmittel
- 16: Eigenantrieb
- 17: Versorgung
- 18: Gleitmittel, Schwebemittel
- 19: Schlitten
- 20: Fahrwagen
- 21: Rolle, Rad
- 22: Arretierung
- 23: Führung
- 24: Plattform
- 25: Schwimmrahmen arretierbar
- 26: Anhänger
- 27: Antriebsmittel
- 28: Abstützmittel, Kontaktelement
- 29: Führung, Ausleger
- 30: Gegenkraftabstützung, Öffnung
- 31: Treibantrieb, Kurbelantrieb, Kurbeltrieb
- 32: Treibelement, Riemen, Zahnriemen, Zahnkranz
- 33: Treibrad, Ritzel
- 34: Sicherung
- 35: Positioniermittel
- 36: Referenzpunkt
- 37: Ausrichtmittel
- 38: Absteckung
- 39: Aufnahme formschlüssig
- 40: Referenzort, Werkstück, Arbeitsstelle
- 41: Hindernis
- 42: Hilfsvorrichtung
- 43: Andrückelement
- 44: Bauteil
- 45: Ablage, Bauteilablage
- 46: Ablage, Werkzeugablage
- 47: Werkstück
- 48: Öffnung

- V: Versatzbewegung, Verlagerungsweg
- I - VII: Achse von Roboter

## Patentansprüche

1. Roboteranordnung mit einem ortsveränderlichen programmierbaren Roboter (2), der mehrere Glieder (4,5,6,7) und Bewegungsachsen (I - VII) aufweist und auf einem mehrachsig relativ zu einem Untergrund (14) beweglichen und antreibbaren Tragmittel (15) angeordnet ist, wobei die Roboteranordnung (1) einen vom Roboter (2) betätigbaren Eigenantrieb (16) für das Tragmittel (15) aufweist, welcher durch eine Bewegung des Roboters (2), insbesondere durch eine Verlagerungsbewegung eines Endglieds (4) des Roboters (2), betätigt wird.

2. Roboteranordnung nach Anspruch 1, **dadurch gekennzeichnet, dass** der Eigenantrieb (16) ein vom Roboter (2) betätigbares Antriebsmittel (27) aufweist, wobei das Antriebsmittel (27) als ein vom Roboter (2) greifbares Abstützmittel (28) ausgebildet ist, das der Roboter (2) mit einer externen Gegenkraftabstützung (30), insbesondere an einem Untergrund (14) oder Referenzort (40), in Eingriff bringt.

3. Roboteranordnung nach Anspruch 1 oder 2, **dadurch gekennzeichnet, dass** der Eigenantrieb (16) ein vom Roboter (2) betätigbares Antriebsmittel (27) aufweist, wobei das Antriebsmittel (27) am Tragmittel (15) angeordnet und als am Tragmittel (15) einwirkender Treibantrieb, insbesondere als Kurbelantrieb (31), ausgebildet ist.

4. Roboteranordnung nach Anspruch 1, 2 oder 3, **dadurch gekennzeichnet, dass** das Tragmittel (15) durch den Eigenantrieb (16) lenkbar ist und mehrere rotatorische und/oder translatorische Bewegungsachsen, insbesondere ein Gleit- oder Schwebemittel (18) oder einen Schlitten (19) oder einen Fahrwagen (20) mit schwenkbaren Rädern (21) aufweist.

5. Roboteranordnung nach einem der vorhergehenden Ansprüche, **dadurch gekennzeichnet, dass** die Roboteranordnung (1) ein Positioniermittel (35) für die Ortsveränderung des Roboters (2) aufweist.

6. Roboteranordnung nach einem der vorhergehenden Ansprüche, **dadurch gekennzeichnet, dass** das Tragmittel (15) eine Arretierung (22) aufweist.

7. Roboteranordnung nach einem der vorhergehenden Ansprüche, **dadurch gekennzeichnet, dass** das Tragmittel (15) eine vom Roboter (2) betätigbare Lageverstellung (9), insbesondere eine Höhenverstellung und/oder Seitenverstellung mit einer oder mehreren Stellachsen, bevorzugt einen arretierbaren Schwimmrahmen (25), aufweist.

8. Roboteranordnung nach einem der vorhergehenden Ansprüche, **dadurch gekennzeichnet, dass** eine Ablage (45,46) für Bauteile (44) und/oder Werkzeuge (11,12) am Tragmittel (15) oder an einem mit dem Tragmittel (15) verbindbaren Anhänger (26) angeordnet ist.

9. Roboteranordnung nach einem der vorhergehenden Ansprüche, **dadurch gekennzeichnet, dass** am Tragmittel (15) eine mit dem Roboter (2) zusammenwirkende gesteuerte Hilfsvorrichtung (42) zur Bewegung und/oder Positionierung von einem Bauteil (44) angeordnet ist.

10. Roboteranordnung nach einem der vorhergehenden Ansprüche, **dadurch gekennzeichnet, dass** der Roboter (2) ein als Universalgreifer ausgebildetes Greifwerkzeug (11) und/oder eine Wechselkupplung (13) für austauschbare Werkzeuge (11,12) aufweist.

11. Roboteranordnung nach einem der vorhergehenden Ansprüche, **dadurch gekennzeichnet, dass** der Roboter (2) eine oder mehrere kraftgesteuerte oder kraftgeregelte Roboterachsen (I - VII) mit einer zugeordneten, einwirkende Belastungen erfassenden Sensorik aufweist.

12. Roboteranordnung nach einem der vorhergehenden Ansprüche, **dadurch gekennzeichnet, dass** der Roboter (2) mindestens eine nachgiebige Achse (I - VII) mit einer Nachgiebigkeitsregelung, insbesondere einer reinen Kraftregelung oder einer Kombination aus Positions- und Kraftregelung, aufweist.

13. Verfahren zum Betrieb einer Roboteranordnung mit einem ortsveränderlichen programmierbaren Roboter (2), der mehrere Glieder (4,5,6,7) und Bewegungsachsen (I - VII) aufweist und auf einem Tragmittel (15) angeordnet ist, wobei das Tragmittel (15) und der Roboter (2) gemeinsam mittels eines vom Roboter (2) betätigten Eigenantriebs (16) in mehreren Richtungen oder Achsen relativ zu einem Untergrund (14) bewegt werden, wobei der Eigenantrieb (16) durch eine Bewegung des Roboters (2), insbesondere durch eine Verlagerungsbewegung eines Endglieds (4) des Roboters (2), betätigt wird.

14. Verfahren nach Anspruch 13, **dadurch gekennzeichnet, dass** mit der Roboteranordnung (1) ein Bauteil (44) gehandhabt, gefügt oder bearbeitet wird, insbesondere ein Bauteil (44) an einem Werkstück (47), insbesondere einem Flugzeugrumpf, montiert oder gefügt wird.

15. Verfahren nach Anspruch 13 oder 14, **dadurch gekennzeichnet, dass** die Roboteranordnung (1) sich mit dem Eigenantrieb (16) zu einem Zielort oder Referenzort bewegt und dort an einem Werkstück (47) über Referenzpunkte positioniert.
